# EUROPEAN PATENT SPECIFICATION

(11) **EP 0 766 016 B1**
(45) Date of publication and mention of the grant of the patent: **15.05.2002**
(21) Application number: 96115305.3
(22) Date of filing: 24.09.1996
(51) Int. Cl.: F16C 33/78

(54) **Perfected sealing and guard ring for rolling bearings**
Abdichtung und Schutzring für Wälzlager
Joint d'étanchéité et anneau de garde pour paliers à roulement

(30) Priority: 26.09.1995 IT TO950768
(43) Date of publication of application: 02.04.1997
(73) Proprietor: RFT S.p.A., 10121 Torino (IT)
(72) Inventor: Visconti, Alberto, 21100 Varese (IT); Giromella, Giovanni, 54033 Fossola da Carrara (IT)
(74) Representative: Plebani, Rinaldo

(56) References cited:
- EP-A- 0 276 877
- EP-A- 0 337 321
- FR-A- 2 546 997
- GB-A- 2 096 716
- US-A- 2 723 869
- US-A- 2 945 707
- US-A- 4 106 781
- US-A- 4 669 895
- US-A- 5 037 213
- US-A- 5 292 199

## Description

The present invention relates to a sealing and guard ring for rolling bearings, particularly heavy duty bearings of farm and/or earth-moving equipment, subjected regularly to external pollutants such as abrasive dust, soil and/or vegetable particles, muddy water, etc.

A sealed rolling bearing according to the preamble of claim 1 is known by EP-A-337 321.

Numerous sealing ring designs are known for meeting the demands of a wide range of applications. One particular type of ring for sealing and protecting rolling bearings from external pollutants comprises a radial annular armature made of metal and presenting a cylindrical peripheral bead, which is forced on to the normally stationary outer ring of the bearing; and an elastomeric membrane is co-molded on to the armature, and terminates with a circular inner edge in the form of a sealing lip, which is fitted with a small amount of interference inside a cylindrical seat to act as a sliding seal on the rotary inner ring of the bearing.

Though effective under normal working conditions, seals of the above type are unsuitable for applications involving severe pollution, such as farm and/or earth-moving equipment subjected to abrasive dust, soil or muddy water.

It is an object of the present invention to provide a sealing and guard ring for rolling bearings, designed to overcome the drawbacks typically associated with known sealing rings.

It is a further object of the present invention to provide a sealing and guard ring designed to effectively safeguard the bearings of farm and/or earth-moving equipment against particularly harmful external pollutants.

According to the present invention, there is provided a sealed rolling bearing of the above-mentioned type which is structured in accordance with the second part of claim 1.

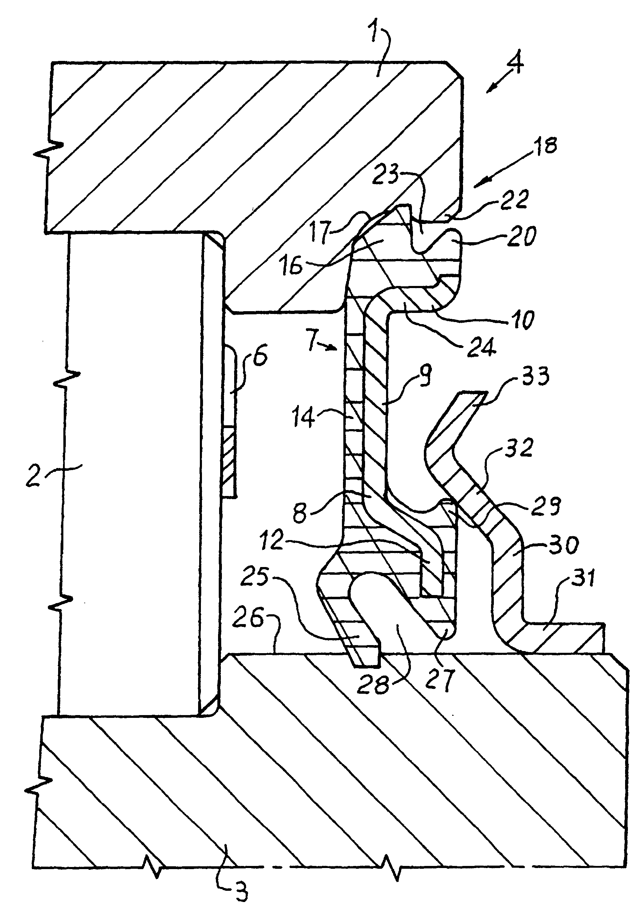

A preferred, non-limiting embodiment of the present invention will be described by way of example with reference to the accompanying drawing, which shows a radial section of part of the sealing ring according to the invention, the remaining part being symmetrical.

Numbers 1, 2 and 3 in the accompanying drawing respectively indicate an outer ring, an intermediate rolling element, e.g. a cylindrical roller, and an inner ring of a rolling bearing 4, which must be adequately protected against external pollutants, and sufficiently sealed to retain the lubricant inserted during manufacture. Rollers 2 are maintained equally spaced by a retainer 6; and, in the following description, it is assumed, without limiting the scope of the present invention, that outer ring 1 is stationary and inner ring 3 rotary.

According to the present invention, the sealing ring 7 comprises an annular metal armature 8 in turn comprising a flat radial portion 9 interposed between two bent end portions 10 and 12 for increasing the rigidity of armature 8.

An elastomeric rubber element 14 is cured by co-molding on to armature 8, predominantly on to the surface of armature 8 facing inwards of the bearing, i.e. facing rollers 2. Rubber element 14 is annular, and comprises, at the outer edge, a thick annular rib 16, which is forced elastically inside an annular groove 17 formed close to the edge 18 of outer ring 1 of bearing 4 and open on the side facing inner ring 3, so that sealing ring 7 is secured by friction to stationary outer ring 1. On the outer side (to the right in the drawing), rib 16 presents a radial projection 20 cooperating with a corresponding radial projection 22 on edge 18 to form an annular labyrinth conduit 23 and provide for improved sealing between ring 7 and outer ring 1 of bearing 4. To support and strengthen rib 16 and radial projection 20, armature 8 is bent roughly 180° outwards of bearing 4 to form an axial bead 24.

On the smaller-radius side facing inner ring 3 of bearing 4, sealing ring 7 comprises a circular sealing lip 25 bent elastically away from rollers 2 and interference-fitted to a cylindrical surface 26 of inner ring 3; and lip 25 is associated with an inner radial projection 27 separated by a small radial clearance from surface 26 of inner ring 3 to form a labyrinth seal next 10 conduit 28, the dynamic effect of the air in which provides for improved sealing by lip 25 as inner ring 3 rotates.

A further projection 29, connected continuously to and radially opposite projection 27, is located, with little and approximately no interference, adjacent to an annular centrifugal element 30 force-fitted integral with inner ring 3 of bearing 4 and on the opposite side of sealing ring 7 to rollers 2. Centrifugal element 30 comprises a metal ring lying substantially in a radial plane and in turn comprising a cylindrical portion 31 fitted to surface 26 of inner ring 3 and connected in one piece to a portion 32, which cooperates with further projection 29, slopes towards rollers 2, and terminates with a portion 33 sloping the opposite way, outwards of bearing 4.

Further projection 29 performs two functions: firstly, it prevents the entry of large particles of pollutant substances when bearing 4 is stationary; and, secondly, by virtue of the centrifugal action of element 30, it provides for expelling any small particles (dust) or liquid from the region adjacent to labyrinth 28 as inner ring 3 rotates.

## Claims

1. A sealed rolling bearing (4) comprising a fixed ring (1), a rotary ring (3), intermediate roller elements (2), a sealing ring (7) and a centrifugal element (30) rotating which is integral with said rotary ring (3); said sealing ring (7) comprising a metal armature (8) and an elastomeric element (14), which is cured on to the armature (8) and presents an outer peripheral supporting rib (16) inserted and secured angularly by friction inside a seat (17) on said fixed ring (1), and at least one annular sealing lip (25) interference-fitted with a small amount of friction to a cylindrical surface (26) of said rotary ring (3); said centrifugal element (30) being located relative said sealing ring (7) axially outwardly opposite to said roller elements (2) and comprising a sloped portion (32) which slopes towards said roller elements (2); wherein said sealing lip (25) is associated with a first radial projection (27) of said elastomeric element (14) facing said cylindrical surface (26) to form an annular labyrinth seal, and wherein a further radial projection (29) of said elastomeric element (14) cooperates with said centrifugal element (30), said first radial projection (27) is relative to said sealing lip (25) located axially outwardly on the opposite side to said roller elements (2), and in that said further radial projection (29) is connected continuously to and radially opposite said first radial projection (27) and cooperates with said sloped portion (32) of said centrifugal element (30) such that said annular sealing lip (25) and said further radial projection (29) form between them two conduits separated by said first radial projection (27).

2. A bearing as claimed in Claim 1, **characterized in that** said rib (16) comprises a radial projection (20) facing a corresponding radial edge (22) of said fixed ring (1); said rib (16) and said radial projection (20) being supported by a bead (24) of said armature (8) bent roughly 90° in relation to a radial portion (9) of said armature (8) and extending axially outwards of said bearing.

3. A bearing as claimed in Claim 1 or 2, **characterized in that** said centrifugal element (30) comprises a cylindrical portion (31) fitted to said cylindrical surface (26) and connected in one piece to said sloped portion (32) sloping towards said roller elements (2), and a further portion (33) sloping the opposite way, outwards of said bearing.

## Patentansprüche

1. Ein abgedichtetes Rollager (4), wobei das Lager folgendes umfaßt: einen feststehenden Ring (1), einen drehenden Ring (3), dazwischenliegende Rollelemente (2), einen Dichtring (7) und ein Zentrifugalelement (30), das mit dem drehenden Ring (3) drehbar verbunden ist; und der Dichtring (7) eine Metallverstärkung (8) aufweist und ein elastomores Element (14), das auf der Verstärkung (8) ausgehärtet wird und eine äußere periphäre Stützrippe (16) besitzt, die in einen Sitz (17) am feststehenden Ring (1) eingeführt und durch Reibung winkelforming gesichert wird, und mindestens eine ringförmige Dichtlippe (25), die mit geringer Reibung durch Preßpassung an einer zylindrischen Oberfläche (26) des drehenden Rings (3) angebracht ist; das Zentrifugalelement (30) relativ positioniert ist zum Dichtring (7) axial auswärts zu den Rollelementen (2) und einen geneigten Abschnitt (32) aufweist, der den Rollelementen (2) zugeneigt ist; wobei die Dichtlippe (25) versehen ist mit einem ersten radialen Vorsprung (27) des elastomeren Elements (14), das der zylindrischen Oberfläche (26) zugewandt ist, um eine ringformige Labyrinthdichtung zu bilden, und wobei ein weiterer radialer Vorsprung (29) des elastomeren Elements (14) mit dem Zentrifugalelement (30) zusammenwirkt, **dadurch gekennzeichnet, daß** der erste radiale Vorsprung (27) relativ zur Dichtlippe (25) axial auswärts an der gegenüberliegenden Seite zu den Rollelementen (2) positioniert ist, und dadurch, daß der weitere radiale Vorsprung (29) standig verbunden ist mit dem ersten Vorspring (27) und diesem radial gegenüber liegt und mit dem geneigten Abschnitt (32) des Zentrifugalelements (30) derart zusammenwirkt, daß die ringförmige Dichtlippe (25) und der weitere radiale Vorsprung (29) zwischen sich zwei Rinnen bilden, die durch den ersten radialen Vorsprung (27) getrennt sind.

2. Ein Lager nach Anspnich 1, **dadurch gekennzeichnet, daß** die Rippe (16) einen radialen Vorsprung (20) aufweist, der einem entsprechenden radialen Rand (22) des feststehenden Rings (1) zugewandt ist; die Rippe (16) und der radiale Vorsprung (20) von elnem Wulst (24) der Verstärkung (8) gestützt werden, der in Relation zu einem radialen Abschnitt (9) der Verstärkung (8) um etwa 90° gebogen ist und sich vom Lager axial auswärts erstreckt.

3. Ein Lager nach Anspruch 1 oder 2, **dadurch gekennzeichnet, daß** das Zentrifugalelement (30) einen zylindrischen Abschritt (31) aufweist, der an der zylindrischen Oberfläche (26) angebracht und in einem Stück mit dem geneigten Abschnitt (32) verbunden ist, der den Rollelementen (2) zugeneigt ist, und einen weiteren Abschnitt (33), der in entgegengesetzter Richtung, zur Außenseite des Lagers hin, geneigt ist.

## Revendications

1. Un palier de roulement étanche (4) comprenant une bague fixe (1), une bague rotative (3), des éléments intermédiaires de roulement (2), une bague d'étanchéité (7) et un élément centrifuge (30) tournant qui est solidaire de ladite bague rotative (3) ; ladite bague d'étanchéité (7) comprenant une armature métallique (8) et un élément en élastomère (14), qui est adhérisé par vulcanisation à l'armature (8) et qui présente une nervure périphérique extérieure de support (16) insérée et fixée angulairement par friction à l'intérieur d'un siège (17) sur ladite bague fixe (1), et au moins une lèvre annulaire d'étanchéité (25) en contact forcé avec un faible frottement avec une surface cylindrique (26) de ladite bague rotative (3) ; ledit élément centrifuge (30) étant situé par rapport à ladite bague d'étanchéité (7) à l'extérieur et axialement opposée aux dits éléments de roulement (2) et comprenant une partie et comprenant une partie inclinée (32) en pente vers lesdits éléments de roulement (2) ; dans lequel ladite lèvre d'étanchéité (25) est associée à une première partie radiale en saillie (27) dudit élément en élastomère (14) en face de ladite surface cylindrique (26) pour former un joint annulaire à labyrinthe et dans lequel une autre partie radiale en saillie (29) dudit élément en élastomère (14) coopère avec ledit élément centrifuge (30), **caractérisé en ce que** ladite première partie radiale en saillie (27) est située par rapport à ladite lèvre d'étanchéité (25) axialement à l'extérieur du côté opposé aux dits éléments de roulement (2) et **en ce que** ladite autre partie radiale en saillie (29) est reliée en continu et radialement opposée à ladite première partie radiale en saillie (27) et coopère avec ladite partie inclinée (32) dudit élément centrifuge (30), de sorte que ladite lèvre annulaire d'étanchéité (25) et ladite autre partie radiale en saillie (29) forment entre elles deux conduits séparés par ladite première partie radiale en saillie (27).

2. Un palier selon la revendication 1, **caractérisé en ce que** ladite nervure (16) comprend une partie radiale en saillie (20) située en face d'un bord radial correspondant (22) de ladite bague fixe (1) ; ladite nervure (16) et ladite partie radiale en saillie (20) étant supportées par un talon (24) de ladite armature (8) replié approximativement à 90° par rapport à une partie radiale (9) de ladite armature (8) et s'étendant axialement vers l'extérieur dudit palier.

3. Un palier selon la revendication 1 ou 2, **caractérisé en ce que** ledit élément centrifuge (30) comprend une partie cylindrique (31) montée sur ladite surface cylindrique (26) et reliée en une pièce à ladite partie inclinée (32) en pente vers lesdits éléments de roulement (2), et une partie (33) en pente du côté opposé vers l'extérieur dudit palier.
